# EUROPÄISCHE PATENTSCHRIFT

(11) **EP 0 924 471 B1**
(45) Veröffentlichungstag und Bekanntmachung des Hinweises auf die Patenterteilung: **28.05.2003**
(21) Anmeldenummer: 98890365.4
(22) Anmeldetag: 09.12.1998
(51) Int. Cl.: F28D 20/00, F24D 17/00, F24D 11/00

(54) **Wärmespeicher**
Heat accumulator
Accumulateur de chaleur

(30) Priorität: 15.12.1997 AT 210797
(43) Veröffentlichungstag der Anmeldung: 23.06.1999
(73) Patentinhaber: Teufel, Arnold, 6372 Oberndorf (AT)
(72) Erfinder: Teufel, Arnold, 6372 Oberndorf (AT)
(74) Vertreter: Hübscher, Helmut, Dipl.-Ing.

(56) Entgegenhaltungen:
- DE-A- 19 612 191
- DE-A- 19 648 652

## Beschreibung

Die Erfindung bezieht sich auf einen Wärmespeicher mit einem Behälter zur temperaturgeschichteten Aufnahme eines Wärmeträgers und mit einem Ladekreis, der einen außerhalb des Behälters vorgesehenen Wärmetauscher zum Erwärmen des Wärmeträgers und eine sich zumindest über einen Teil der Behälterhöhe erstreckende, mit dem Behälter in unterschiedlichen Höhen strömungsverbundene Steigleitung für den erwärmten Wärmeträger umfaßt.

Ein derartiger wärmespeicher ist zum Beispiel aus der DE-A-196 12 191 bekannt.

Um die Wärmeenergie von Wasser auf einem möglichst hohen Temperaturniveau speichern zu können, ist eine Temperaturschichtung des in einem Behälter gespeicherten Wassers anzustreben, wobei diese Temperaturschichtung des Wassers beim Laden des Speichers nicht beeinträchtigt werden soll, weil zwangsläufig Mischtemperaturen kleiner als die Temperatur der wärmeren der sich mischenden Schichten ist. Um trotz eines beispielsweise bei der Ausnützung der Sonnenenergie auftretenden, ungleichmäßigen Wärmeangebotes und der dadurch bedingten unterschiedlichen Ladetemperatur einen Warmwasserspeicher ohne besonderen Steuerungsaufwand so laden zu können, daß das mit Hilfe der Sonnenenergie erwärmte Wasser einer Wasserschicht des Speichers mit einer der jeweiligen Ladetemperatur entsprechenden Schichttemperatur zugeführt wird, ist es bekannt (EP 0 518 369 A1), im Speicherbehälter eine sich über die Behälterhöhe erstreckende Steigleitung vorzusehen, in der eine Ladeleitung eines Ladekreises mündet. Dieser Ladekreis entnimmt dem Speicherbehälter das zu erwärmende Wasser im Bodenbereich, um es über einen Wärmetauscher aufzuwärmen und der Steigleitung in einem mittleren Höhenbereich zuzuführen, die an ihrem oberen Ende und im Bereich unterhalb der Mündung der Ladeleitung Durchtrittsöffnungen aufweist, so daß unter bestimmten Strömungsverhältnissen das über die Ladeleitung zuströmende Wasser in Abhängigkeit von seiner Ladetemperatur entweder in der Steigleitung nach oben aufsteigt oder nach unten absinkt, um durch die Durchtrittsöffnungen der Steigleitung in die der Ladetemperatur angepaßte Wasserschicht auszutreten. Wegen des Zwangsumlaufes des durch den Ladekreis geförderten Wassers können jedoch die für die angestrebte Wirkung erforderlichen Strömungsverhältnisse kaum eingehalten werden. Dazu kommt noch, daß die Steigleitung nicht nur innerhalb des Speicherbehälters angeordnet werden muß, sondern auch gegenüber dem Behälter zu isolieren ist, um einen den Schichtaufbau störenden Wärmeaustausch zwischen der Steigleitung und dem Speicherbehälter zu unterbinden.

Der Erfindung liegt somit die Aufgabe zugrunde, einen Wärmespeicher der eingangs geschilderten Art so auszugestalten, daß ohne Steuerungsaufwand eine der Temperaturschichtung entsprechende Ladung des Wärmespeichers über den Ladekreis gewährleistet werden kann.

Die Erfindung löst die gestellte Aufgabe dadurch, daß die außerhalb des Behälters verlaufende, über Verbindungsleitungen an den Behälter angeschlossene Steigleitung mit dem Wärmetauscher einen selbstumlaufenden Ladekreis bildet.

Da die Steigleitung mit dem Wärmetauscher im Gegensatz zu herkömmlichen Wärmespeichern mit einem Zwangsumlauf im Bereich des Ladekreises einen selbstumlaufenden Ladekreis bildet, hängt die Ladekreisströmung bei gegebenen Konstruktionsparametern ausschließlich von der jeweiligen Temperatur des im Wärmetauscher erwärmten Wärmeträgers und der Schichttemperatur im Behälter im Bereich der Verbindungsleitungen ab. Aufgrund der temperaturabhängigen Dichteunterschiede steigt der im Wärmetauscher erwärmte Wärmeträger in der Steigleitung solange auf, bis die Schichttemperatur im Behälter im Bereich einer Verbindungsleitung der Temperatur des Wärmeträgers in der Steigleitung entspricht, so daß sich wegen der Thermosiphonwirkung des selbstumlaufenden Ladekreises eine der jeweiligen Temperaturschichtung im Behälter entsprechende Ladung des Wärmespeichers einstellt. Der selbstumlaufende Ladekreis erfordert zwar eine Nacheinanderschaltung des Wärmetauschers und der Steigleitung der Höhe nach, doch kann das Heizmedium für den Wärmetauscher in einem Zwangsumlauf geführt werden, so daß das jeweilige Wärmeangebot durch das Heizmedium trotz der unterschiedlichen Temperaturniveaus gut ausgenützt werden kann.

Besonders vorteilhafte Konstruktionsverhältnisse ergeben sich, wenn der Wärmetauscher zumindest einen unteren Abschnitt der Steigleitung bildet, weil in diesem Fall die Temperatur des Wärmeträgers in diesem unteren Abschnitt der Steigleitung entlang dieser ansteigt, so daß sich eine zusätzliche Anpassung der Wärmeträgertemperatur im Bereich der Steigleitung auf die jeweilige Schichttemperatur im Behälter ergibt. Durch den im unteren Abschnitt der Steigleitung ansteigenden Temperaturverlauf des Wärmeträgers kann einfach verhindert werden, daß ein auf eine höhere Temperatur erwärmter Wärmeträger aus dem Ladekreis durch eine untere Verbindungsleitung in eine kältere Temperaturschicht im Behälter strömt und die Wärmeschichtung im Behälter beeinträchtigt. Zum gleichen Zweck können mit Ausnahme der obersten Verbindungsleitung zumindest die Verbindungsleitungen oberhalb des Wärmetauschers einen gegen den Behälter abfallenden Abschnitt aufweisen. Dieser gegen den Behälter hin abfallende Abschnitt der Verbindungsleitung kann nur bei einem vergleichsweise geringen Temperaturunterschied zwischen dem in der Steigleitung aufsteigenden Wärmeträger und der im Bereich der Verbindungsleitung anliegenden Wärmeträgerschicht des Behälters überwunden werden, also nur dann, wenn der Behälter im Bereich dieser anliegenden Schicht geladen werden soll.

Da der Wärmespeicher im Bereich einer Temperaturschicht nur dann über die zugehörige Verbindungsleitung geladen werden kann, wenn die Temperatur des Wärmeträgers in der Steigleitung nicht niedriger als die Schichttemperatur ist, empfiehlt es sich sich, die oberste Verbindungsleitung mit Abstand unterhalb der Behälterdecke in den Behälter münden zu lassen, damit der Wärmespeicher auch über die oberste Verbindungsleitung entsprechend dem höchsten Temperaturniveau geladen werden kann.

Wie bereits ausgeführt wurde, erzwingt der selbstumlaufende Ladekreis eine Anordnung des Wärmetauschers und der Steigleitung der Höhe nach übereinander, so daß der Wärmetauscher mit dem Steigrohr vorteilhaft eine Baueinheit bilden kann, die seitlich an den Behälter über die Verbindungsleitungen angeschlossen wird. Damit ergeben sich einfache Konstruktionsbedingungen, die den Einsatz eines solchen selbstumlaufenden Ladekreises bei unterschiedlichen Wärmespeichern erlaubt, ohne den Wärmespeicher konstruktiv ändern zu müssen.

In der Zeichnung ist der Erfindungsgegenstand beispielsweise dargestellt. Es zeigen
- Fig. 1: einen erfindungsgemäßen, an einen Sonnenkollektor angeschlossenen Wärmespeicher in einem schematischen Blockschaltbild und
- Fig. 2: den Ladekreis für diesen Wärmespeicher in einem vereinfachten Teilschnitt in einem größeren Maßstab.

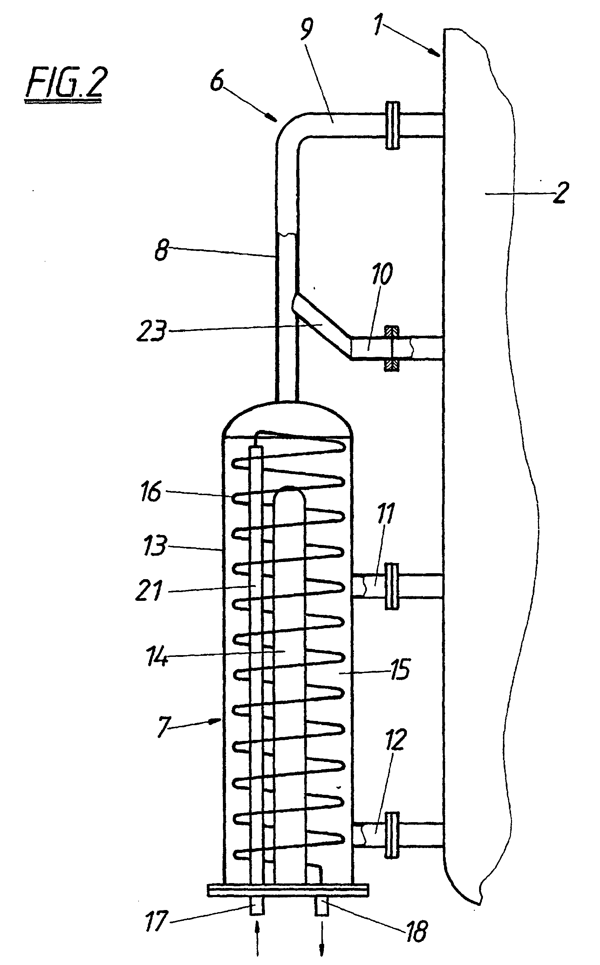

Der Wärmespeicher 1 gemäß dem dargestellten Ausführungsbeispiels weist einen stehenden Behälter 2 auf, der zur Warmwasseraufbereitung eine Rohrschlange 3 aufnimmt, die unten an einen Kaltwasserzulauf 4 und oben an eine Warmwasserentnahmeleitung 5 angeschlossen ist. Dieser Wärmespeicher 1 wird über einen Ladekreis 6 geladen, der aus einem Wärmetauscher 7 und einer Steigleitung 8 besteht. Die aus dem Wärmetauscher 7 und der Steigleitung 8 gebildete Baueinheit ist seitlich über Verbindungsleitungen 9, 10, 11 und 12 an den Behälter 2 angeschlossen. Der Wärmetauscher 7 selbst weist gemäß der Fig. 2 ein Gehäuse 13 mit einem koaxialen Strömungseinsatz 14 auf, so daß sich für den für die unterste Verbindungsleitung 12 aus dem Behälter 2 zuströmenden Wärmeträger, üblicherweise Wasser, ein im Querschnitt ringförmiger Strömungskanal 15 ergibt, in dem eine Rohrschlange 16 für ein Heizmedium, vorzugsweise ebenfalls Wasser, verlegt ist. Diese Rohrschlange 16 ist an den Vorlauf 17 und an den Rücklauf 18 eines Sonnenkollektors 19 angeschlossen. Das über den Sonnenkollektor 19 erwärmte Heizmedium wird mit Hilfe einer Umlaufpumpe 20 über eine wärmeisolierte Zuleitung 21 der Rohrschlange 16 des Wärmetauschers 7 zugeführt und erwärmt im Gegenstrom den im Ringraum 15 befindlichen Wärmeträger für den Wärmespeicher 1. Die mit der Erwärmung verbundene Abnahme der Dichte des Wärmeträgers führt zu einer Aufwärtsströmung des Wärmeträgers im Ringkanal 15 und durch die den Ringkanal 15 fortsetzende Steigleitung 8, um beispielsweise über die oberste Verbindungsleitung 9 in den Behälter 2 zurückgeführt zu werden. Die Ladung des Behälters 2 über die oberste Verbindungsleitung 9, die mit Abstand unterhalb der Behälterdecke 22 in den Behälter 2 mündet, ist jedoch nur möglich, wenn die Temperatur der Wärmeträgerschicht im Behälter 2 im Bereich der Verbindungsleitung 9 niedriger als die des über den Wärmetauscher 7 erwärmten Wärmeträgers ist. Sinkt die Ladetemperatur des Wärmeträgers zufolge eines geringeren Wärmeangebotes durch das Heizmedium unter die Schichttemperatur im Bereich der Verbindungsleitung 9, so erfolgt die Ladung des Behälters 2 über eine der Verbindungsleitungen 10, 11 im Bereich jener Wärmeträgerschicht, die eine an die jeweilige Ladetemperatur angepaßte Schichttemperatur aufweist.

Wie insbesondere die Fig. 2 erkennen läßt, ist die Verbindungsleitung 10 zwischen der obersten Verbindungsleitung 9 und dem Wärmetauscher 7 mit einem gegen den Behälter 2 hin abfallenden Abschnitt 23 versehen, der bei einer Ladung des Behälters 2 über die oberste Verbindungsleitung 9 verhindert, daß ein Teil des erwärmten Wärmeträgers aus der Steigleitung 8 über die Verbindungsleitung 10 in den Behälter 2 fließt und dort die Temperaturschichtung stört. Der in der Verbindungsleitung 10 entsprechend der anliegenden Temperaturschicht im Behälter 2 kältere Wärmeträger steht einem Absinken des in der Steigleitung 8 aufsteigenden wärmeren Wärmeträgers über den abfallenden Abschnitt 23 entgegen. Eine ähnliche Maßnahme ist für die Verbindungsleitung 11 nicht erforderlich, weil sich diese Verbindungsleitung 11 im Bereich des Ringkanales 15 des Wärmetauschers 7 befindet und sich der Wärmeträger im Ringkanal 15 im Bereich der Verbindungsleitung 11 noch nicht auf ein Temperaturniveau aufgewärmt hat, das einen die Behälterschichtung beeinträchtigenden Ladevorgang über die Verbindungsleitung 11 befürchten läßt. Wegen des Anschlusses der Verbindungsleitung 11 an den Wärmetauscher 7 im Bereich von dessen Ringkanal 15 bildet der Ringkanal 15 den unteren Abschnitt der Steigleitung 8.

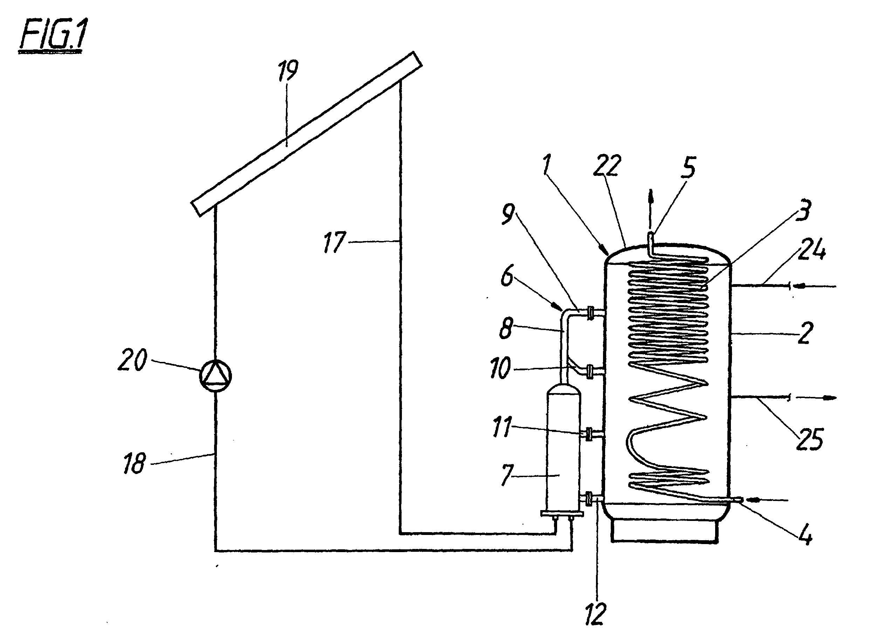

Der Wärmespeicher 2 kann nicht nur über den Ladekreis 6 geladen werden. Es ist durchaus möglich, zusätzlich eine Ladung über einen Heizkessel vorzusehen, dessen Vorlauf mit 24 und dessen Rücklauf mit 25 in der Fig. 1 bezeichnet sind. Da beim Laden des Wärmespeichers 1 über einen Heizkessel von konstanten Ladetemperaturen ausgegangen werden kann, ist für diese Ladung kein selbstumlaufender Ladekreis erforderlich.

Es braucht wohl nicht besonders hervorgehoben zu werden, daß die Erfindung nicht auf das dargestellte Ausführungsbeispiel beschränkt ist. Es kommt ja lediglich darauf an, daß bei einem variierenden Wärmeangebot für den Ladekreislauf 6 ein selbstumlaufender Ladekreis mit einem Wärmetauscher 7 und einer Steigleitung 8 außerhalb des Behälters 2 vorgesehen wird, der an die Steigleitung 8 bzw. den Wärmetauscher 7 über der Höhe nach verteilte Verbindungsleitungen 9, 10, 11, 12 angeschlossen wird. Der Aufbau des Wärmespeichers 1 selbst ist unabhängig von der Ladung über den selbstumlaufenden Ladekreis 6. Außerdem können unterschiedliche Wärmetauscher 7 für den Ladekreis 6 eingesetzt werden, weil es ja lediglich darum geht, den aus dem Bodenbereich des Wärmespeichers 1 abgezogenen Wärmeträger so zu erwärmen, daß er wieder in eine höhere Temperaturschicht rückgeführt werden kann, ohne die Temperaturschichtung im Behälter 2 des Wärmespeichers 1 zu gefährden.

## Patentansprüche

1. Wärmespeicher (1) mit einem Behälter (2) zur temperaturgeschichteten Aufnahme eines Wärmeträgers und mit einem Ladekreis (6), der einen außerhalb des Behälters (2) vorgesehenen Wärmetauscher (7) zum Erwärmen des Wärmeträgers und eine sich zumindest über einen Teil der Behälterhöhe erstreckende, mit dem Behälter (2) in unterschiedlichen Höhen strömungsverbundene Steigleitung (8) für den erwärmten Wärmeträger umfaßt, **dadurch gekennzeichnet, daß** die außerhalb des Behälters (2) verlaufende, über Verbindungsleitungen (9, 10, 11, 12) an den Behälter (2) angeschlossene Steigleitung (8) mit dem Wärmetauscher (7) einen selbstumlaufenden Ladekreis (6) bildet.

2. Wärmespeicher nach Anspruch 1, **dadurch gekennzeichnet, daß** der Wärmetauscher (7) zumindest einen unteren Abschnitt der Steigleitung (8) bildet.

3. Wärmespeicher nach Anspruch 1 oder 2, **dadurch gekennzeichnet, daß** mit Ausnahme der obersten Verbindungsleitung (9) zumindest die Verbindungsleitungen (10) oberhalb des Wärmetauschers (7) einen gegen den Behälter (2) abfallenden Abschnitt (23) aufweisen.

4. Wärmespeicher nach einem der Ansprüche 1 bis 3, **dadurch gekennzeichnet, daß** die oberste Verbindungsleitung (9) mit Abstand unterhalb der Behälterdecke (22) in den Behälter (2) mündet.

5. Wärmespeicher nach einem der Ansprüche 1 bis 4, **dadurch gekennzeichnet, daß** der Wärmetauscher (7) mit dem Steigrohr (8) eine an den Behälter (2) seitlich anschließbare Baueinheit bildet.

## Claims

1. A heat accumulator (1) comprising a container (2) for holding a heat transfer medium in layers at different temperatures and also comprising a loading circuit (6) containing a heat exchanger (7) outside the container (2) for heating the heat transfer medium and a rising pipeline (8) for the heated heat transfer medium, extending at least partly up the container (2) and connected for flow purposes thereto at different heights, **characterised in that** the rising pipeline (8) extending outside the container (2) and connected by lines (9, 10, 11, 12) to the container (2) forms an automatically circulating loading circuit (6) with the heat exchanger (7).

2. A heat accumulator according to claim 1, **characterised in that** the heat exchanger (7) constitutes at least a lower portion of the rising pipeline (8).

3. A heat exchanger according to claim 1 or 2, **characterised in that** at least the connecting lines (10) above the heat exchanger (7), apart from the top connecting line (9), have a portion (23) which slopes downwards towards the container (2).

4. A heat accumulator according to any of claims 1 to 3, **characterised in that** the top connecting line (9) opens into the container (2) at a distance below the container cover (22).

5. A heat accumulator according to any of claims 1 to 4, **characterised in that** the heat exchanger (7) and the rising pipeline (8) form a structural unit for connecting to the side of the container (2).

## Revendications

1. Accumulateur de chaleur (1) avec un récipient (2) pour la réception, avec stratification des températures, d'un caloporteur, et avec un circuit de charge (6) comprenant un échangeur de chaleur (7) prévu à l'extérieur du récipient (2), pour chauffer le caloporteur, et une conduite montante (8), s'étendant au moins sur une partie de la hauteur du récipient, reliée en écoulement au récipient (2) à des hauteurs différentes, pour le caloporteur chauffé, **caractérisé en ce que** la conduite montante (8) s'étendant à l'extérieur du récipient (2), raccordée au récipient (2) par des conduites de liaison (9, 10, 11, 12), forme avec l'échangeur de chaleur (7) un circuit de charge (6) à circulation automatique ou naturelle.

2. Accumulateur de chaleur selon la revendication 1, **caractérisé en ce que** l'échangeur de chaleur (7) forme au moins un tronçon inférieur de la conduite montante (8).

3. Accumulateur de chaleur selon la revendication 1 ou 2, **caractérisé en ce que**, à l'exception de la conduite de liaison (9) la plus haute, au moins les conduites de liaison (10) situées au-dessus de l'échangeur de chaleur (7) présentent un tronçon (23) allant en descendant en direction du récipient (2).

4. Accumulateur de chaleur selon l'une des revendications 1 à 3, **caractérisé en ce que** la conduite de liaison (9) la plus haute débouche dans le récipient (2), à distance au-dessous du plafond de récipient (22).

5. Accumulateur de chaleur selon l'une des revendications 1 à 4, **caractérisé en ce que** l'échangeur de chaleur (7) forme avec le tube montant (8) un ensemble de construction pouvant être raccordé radialement au récipient (2).
